# EUROPEAN PATENT APPLICATION

(11) **EP 2 827 596 A1**
(43) Date of publication of application: **21.01.2015**
(21) Application number: 12874371.3
(22) Date of filing: 07.06.2012
(51) Int. Cl.: H04N 21/2381

(54) **TRANSMITTING AND RECEIVING METHOD OF MULTIMEDIA VIDEO DATA AND CORRESPONDING DEVICE**

(30) Priority: 19.04.2012 CN 201210115458
(71) Applicant: ZTE Corporation, Shenzhen, Guangdong 518057 (CN)
(72) Inventor: SHANG, Guoqiang, Shenzhen, Guangdong 518057 (CN)
(74) Representative: Protector IP Consultants AS
(86) International application number: PCT/CN2012/076561
(87) International publication number: WO 2013/155766

(57) **Abstract**

Methods for transmitting and receiving multimedia video data and a device thereof are disclosed to improve multimedia video data playout quality. The transmitting method comprises: configuring different data channels for key frame data and non-key frame data, and configuring a larger bandwidth for the key frame data channel than that for the non-key frame data channel; when transmitting the data to a receiving end, bearing the key frame data and the non-key frame data on different data channels to transmit according to the configuration. The receiving method comprises: sending a resource request to a source end; establishing multiple data channels with the source end according to the configuration content fed back by the source end; receiving the key frame data and the non-key frame data on different data channels; merging and outputting the received key and non-key frame data.

## Description

### Technical Field

The present invention relates to the field of multimedia communications, and more particularly, to methods for transmitting and receiving multimedia video data and a device thereof

### Background of the Invention

With the development of mobile Internet and the upgrade of the terminal's hardware and software, the multimedia data transmission has become an indispensable part, and how to efficiently transmit the data becomes one of the many subjects studied in the industry. Currently, standard transmission protocols such as RTP (Real-time Transport Protocol), RTSP (Real Time Streaming Protocol) and RTCP (RTP Control Protocol) are responsible for transmitting the streaming media data. Moreover, the general streaming media data transmission currently is divided into two situations: one is to interleave and transmit audio data and video data, and the other one is to transmit the audio data and the video data separately. No matter which one is used, the user experience is influenced to a certain extent since the video data occupies a relatively large bandwidth and has relatively high requirements on the terminal's processing capability. Through analysis, video stuck and mosaic are relatively important factors affecting the user experience, and how to avoid these effects is the problem that needs to be addressed currently.

### Summary of the Invention

To solve the technical problem, the embodiment of the present invention provides methods for transmitting and receiving multimedia video data and a device thereof, to improve multimedia video data playout quality.

In order to solve the abovementioned technical problem, the embodiment of the present invention provides a method for transmitting multimedia video data, comprising:
a source end configuring different data channels for key frame data and non-key frame data, and configuring a bandwidth for a key frame data channel than that for a non-key frame data channel; and
when said source end sends data to a receiving end, said source end bearing said key frame data and said non-key frame data on different data channels to transmit based on configuration.

Alternatively, there is one or more channels configured for said key frame data; and there is one or more channels configured for said non-key frame data.

Alternatively, said method further comprises: configuring a higher priority for said key frame data channel than that for said non-key frame data channel; when transmitting data, sending said key frame data and said non-key frame data in a descending order of priority.

Alternatively, said method further comprises: configuring different data channels and different bandwidths for different types of non-key frames; when transmitting said non-key frame data, bearing said different types of non-key frame data on different data channels to transmit based on said configuration.

Alternatively, said method further comprises: configuring different priorities for different types of non-key frames; when sending said non-key frame data, sending in a descending order of the priorities.

In order to solve the abovementioned technical problem, the embodiment of the present invention further provides a method for receiving multimedia video data, comprising:
a receiving end sending a resource request to a source end, and establishing multiple data channels with said source end according to a configuration content fed back by said source end;
said receiving end receiving key frame data and non-key frame data on different data channels;
said receiving end merging and outputting received said key frame data and said non-key frame data.

Optionally, said configuration content fed back by said source end comprises data channels bearing said key frame data and said non-key frame data.

To solve the abovementioned technical problem, the embodiment of the present invention provides a transmitting device for multimedia video data, comprising a configuring module and a transmitting module, wherein:
said configuring module is set to configure different data paths for key frame data and non-key frame data and configure a higher bandwidth for a key frame data channel than that for a non-key frame data channel;
said transmitting module is set to, when sending data to a receiving end, bearing said key frame data and said non-key frame data on different data channels to transmit according to said configuration.

Optionally, there is one or more channels configured by said configuring module for said key frame data, and there is one or more channels configured by said configuring module for said non-key frame data.

Optionally, said configuring module is further set to configure a higher priority for said key frame data channel than that for said non-key frame data channel;
said transmitting module is set to transmit data in the following manner: transmitting said key frame data and said non-key frame data in a descending order of priorities.

Optionally, said configuring module is further set to configure different data channels and different bandwidths for different types of non-key frames; said transmitting module is configured to transmit said non-key frame data in the following manner: bearing said different types of non-key frame data on different data channels to transmit according to said configuration.

Alternatively, said configuring module is further set to configure different priorities for different types of non-key frames; said transmitting module is configured to transmit said non-key frame data in the following manner: transmitting said data in a descending order of priorities.

In order to solve the abovementioned technical problem, the embodiment of the present invention provides a receiving device for multimedia video data, comprising a requesting module, a receiving module, and a processing module, wherein:
said requesting module is set to send a resource request to a source end, and establish multiple data channels with said source end according to a configuration content fed back by said source end;
said receiving module is set to receive key frame data and non-key frame data on different data channels;
said processing module is set to merge and output said received key frame data and said non-key frame data.

Optionally, said configuration content comprises data channels bearing said key frame data and said non-key frame data.

The methods and devices in accordance with the embodiments of the present invention process the frame data of video data at the source end, and send said data on different channels with different bandwidths and different priorities, thus data with a bigger size and higher priority can reach the receiving end relatively fast, thus reducing phenomena such as video stuck and mosaics when the receiving end is displaying the data, and effectively improving the user experience.

### Brief Description of the Drawings

FIG. 1 is a flow chart of a transmitting method in accordance with a first embodiment of the present invention;
FIG. 2 is a schematic diagram of transmitting different frame data through different channels;
FIG. 3 is a schematic diagram of the structure of a transmitting device in accordance with the first embodiment of the present invention;
FIG. 4 is a flow chart of a receiving method in accordance with the second embodiment of the present invention;
FIG. 5 is a schematic diagram of a receiving device in accordance with the second embodiment of the present invention.

### Preferred Embodiments of the present invention

Through analysis, the inventors found that the key factor causing the playing of multimedia video not smooth is that there is problem in transmitting or receiving key frames of the video data. When the key frames cannot reach the terminal and be decoded in time, it will result in that the playing of multimedia video is not smooth. For this reason, by improving the key frame transmission and reception, this problem can be solved and the user experience can be improved. Currently, in the streaming media and television broadcasting system, typically the key frames and other non-key frames such as P-frame and B frame of a video are packed to transmit on one channel, such transmitting method has no problem in the case that there is sufficient bandwidth, but in the case of insufficient bandwidth, the user experience will be very different.

Hereinafter, with combination of the accompanying figures, the embodiments of the present invention will be described in detail. It should be noted that, in the case of no conflict, the embodiments and features in the embodiments of the present application may be arbitrarily combined with each other.

### Embodiment 1

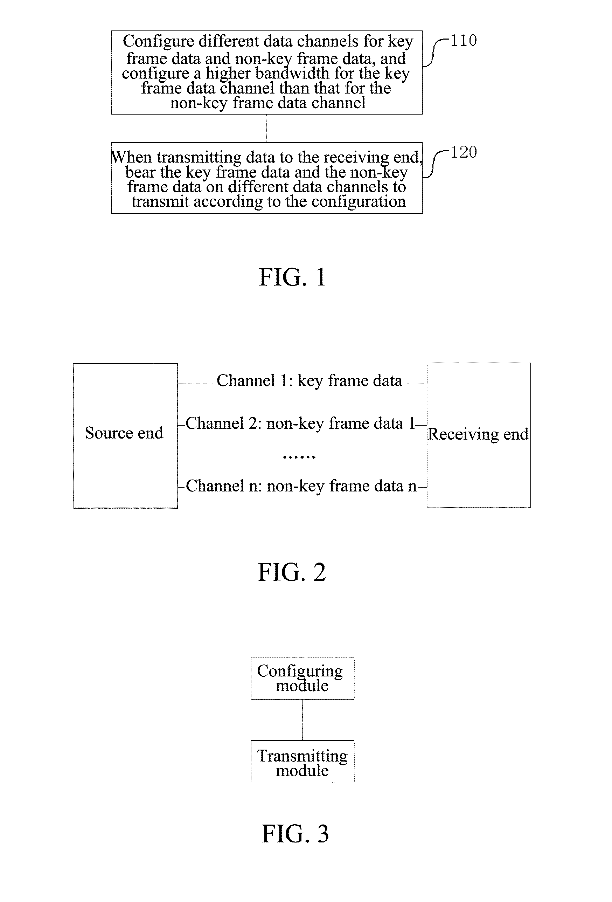

The present embodiment illustrates the multimedia video data transmission, that is, the process performed by the source end, as shown in FIG. 1, the process comprises the following steps.

Step 110, configure different data channels for key frame data and non-key frame data, and configure a higher bandwidth for the key frame data channel than that for the non-key frame data channel.

There may be one or more channels configured for said key frame data. Similarly, there may be one or more channels configured for said non-key frame data. But said key frame data and said non-key frame data should be configured on different data channels.

In other embodiments, the priorities of said data channels can also be configured, for example, configuring a higher priority for said key frame data channel than that for said non-key frame data channel.

As a result of the configuration, a description file and/or a configuration file is generated. Said description file and/or said configuration file are sent by said source end to said receiving end when said receiving end initiates a resource request, and said receiving end requests said source end to establish corresponding data channels according to said description file and/or configuration file.

If there are importance differences in different types of non-key frames, different data channels and different bandwidths can be configured for said different types of non-key frames. In addition, different priorities may also be configured for said different types of non-key frames.

Step 120, when transmitting data to said receiving end, bear said key frame data and said non-key frame data on different data channels to transmit according to configuration.

Before transmitting the data, said source end decomposes said key frame data and said non-key frame data out based on said configuration. The decomposition process may be performed according to a method in the prior art.

If the configuration information comprises the priority information, send the data in the order of priority. For example, if said key frame data channel is configured with a higher priority than that for said non-key frame data channel, and then said key frame data channel can be sent first.

If different data channels and different bandwidths are also configured for said non-key frame data, send the non-key frame data in response according to said configuration, as shown in FIG. 2.

By sending said key frame data and said non-key frame data separately, configuring a larger bandwidth for said key frame data, and configuring a smaller bandwidth for said non-key frame data, it can ensure that said key frames arrives the terminal timely, even if said non-key frame does not arrive, the problem that the multimedia video playback is not smooth is not particularly serious, and the user experience can be greatly improved.

The transmitting device for achieving the abovementioned transmitting method is shown in FIG. 3, comprising a configuring module and a transmitting module, wherein:
said configuring module is set to configure different data channels for said key frame data and said non-key frame data, and configure a larger bandwidth for said key frame data channel than that for said non-key frame data channel;
said transmitting module is set to, when transmitting data to said receiving side, bear said key frame data and said non-key frame data on different data channels to transmit according to said configuration.

There is one or more channels configured by said configuring module for said key frame data; there is also one or more channels configured by said configuring module for said non-key frame data.

Preferably, said configuring module is also set to configure a higher priority for said key frame data channel than that of said non-key frame data channel; said transmitting module sends said key frame data and said non-key frame data in the the descending order of priority.

Preferably, said configuring module can also configure different types of non-key frames with different data channels and different bandwidths; in this case said transmitting module bear different types of non-key frame data on different data channels to transmit according to said configuration.

Preferably, said configuring module can also configure different types of non-key frames with different priorities; at this point, said transmitting module transmits said non-key frame data in the descending order of priorities.

### Embodiment 2

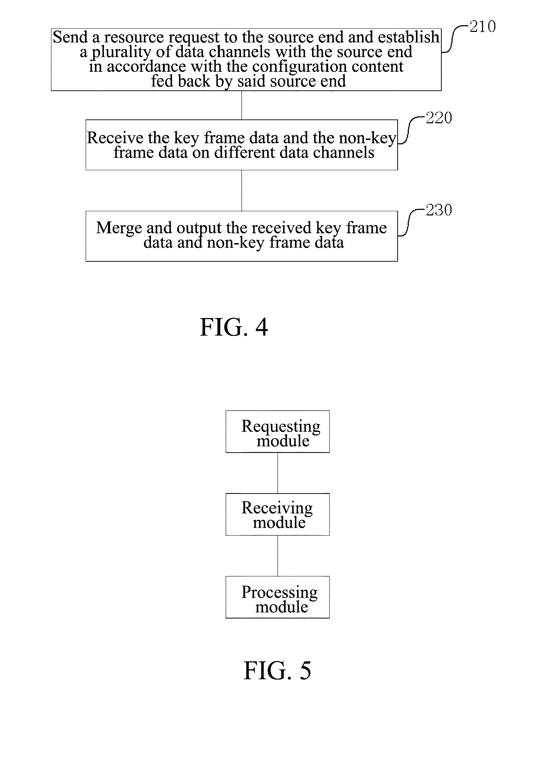

This embodiment illustrates the multimedia video data reception, that is, the procedure executed by said receiving end, and as shown in FIG. 4, it comprises the following steps.

Step 210, send a resource request to said source end and establish a plurality of data channels with said source end in accordance with the configuration content fed back by said source end.

Said configuration content fed back by said source end comprises at least the data channels bearing said key frame data and said non-key frame data.

Step 220, receive said key frame data and said non-key frame data on different data channels.

Step 230, merge and output the received key frame data and non-key frame data.

The merging process may be performed in accordance with a method in the prior art.

A receiving device for implementing the abovementioned receiving method is shown in FIG. 5, comprising a requesting module, a receiving module, and a processing module, wherein:
said requesting module is set to send a resource request to said source end and establish a plurality of data channels with said source end according to the configuration contents fed back by said source end;
said receiving module is set to receive said key frame data and said non-key frame data on different data channels;
said processing module is set to merge and output the received key frame data and non-key frame data.

### Application Example 1

This example describes the transmission of H.264 data. Said H.264 data are sent via a streaming media server, configure the key-frame I to be sent on a single channel, the non-key frames P-frame and B-frame to be sent on one channel, and the audio to be sent on one channel. (This example focuses on sending different types of video frames on multiple channels, so that the audio is not specially pointed out).
Step 1, configure the video data source with different bit rates at said source end. For example, said video data are sent through two channels, wherein, one channel is used to send the key frame, and the other is used to transmit said P-frame and B-frame; one channel is used to transmit the audio to form a description file and/or a configuration file to be used by said source end and said receiving end;
step 2, said receiving end initiates a resource request to said source end;
step 3, after said source end receives said resource request, it sends said description file and/or said configuration file to said receiving end;
step 4, said receiving end analyzes said description file and/or said configuration file, reads configuration information such as the channel to be established, and requests to establish a data channel with said source end, sets a data cache area, and waits to receive the data of said source end;
step 5, after said source end receives said request from said receiving end, it reads said resource configuration file and/or said description information, obtains the resource's configuration information, accepts said receiving end's channel establishment request and establishes the related channel, processes said resource data, and according to the configuration information, sends different data on different data channels, for example, sending I-frame data on channel 1, sending P-frame and B-frame data on channel 2, and sending the video-related audio data on channel 3;
step 6, said receiving end receives and caches the data from the respective channels, merges, decodes and displays said data.

The above example is for transmitting the video data on two channels, that is, said key frame data are transmitted on one channel, and said non-key frame data are transmitted on the other channel.

### Application Example 2

This example describes the transmission of 3D data. Said 3D data are transmitted by the stream media server, and three channels are configured to transmit said video, wherein, one channel transmits the key frames, one channel transmits the non-key frames, and the other channel transmits the depth data; said audio data may be transmitted via another channel.
Step 1, said source end configures video data sources with different bit rates. For example, said video data are sent via three channels, wherein one channel is used to send the key frames, one channel is used to send the non-key frames, the other channel is used to send the depth data, and the audio data can be sent via another single channel to form the description file and/or configuration file for said source end and receiving end to use;
step 2, said receiving end initiates a resource request to said source end;
step 3, after said source end receives said resource request, it sends the description file and/or the configuration file to said receiving end;
step 4, said receiving end analyzes said description file and/or said configuration file, reads configuration information such as the channel to be established, requests to establish a data channel with said source end, sets a data cache area, and waits to receive the data from said source end;
step 5, said source end receives the request of said receiving end, it reads out said resource configuration file and/or description file, obtains said resource's configuration information, accepts said receiving end's channel establishment request and establishes the relevant channel, processes said resource data, and according to said configuration information, send different data on different data channels, for example, sending the key frame data on channel 1, sending the non-key frame data on channel 2, sending the depth data on channel 3, and sending the audio on another channel.

In this example, the depth data occupies a separate channel, in other embodiments, said depth data can be sent together with said non-key frame data.

Step 6, said receiving end receives and caches the data from the respective channels, then processes, decodes and displays said data.

The above example describes a scenario of 3D data transmission, and illustrates that said video data can be sent on different channels according to their types, to improve the ultimate user experience.

Those ordinarily skilled in the art can understand that all or some of steps of the abovementioned method may be completed by the programs instructing the relevant hardware, and said programs may be stored in a computer-readable storage medium, such as read only memory, magnetic or optical disk. Optionally, all or some of the steps of the abovementioned embodiments may also be implemented by using one or more integrated circuits. Accordingly, each module/unit in the abovementioned embodiment may be realized in the form of hardware or software function module. The present invention is not limited to any specific form of hardware and software combinations.

Of course, the present invention may have a variety of embodiments, and without departing from the spirit and essence of the present invention, a person skilled in the field can make various changes and modifications correspondingly according to the present invention, and these changes and modifications should belong to the protection scope of the claims of the present invention.

### Industrial Applicability

The methods and devices in accordance with the embodiments of the present invention process the video frame data at the source end, and send said data on different channels with different bandwidths and different priorities, thus data with a bigger size and higher priority can reach the receiving end relatively fast, thus reducing phenomena such as video stuck and mosaics when the receiving end is displaying the data, and effectively improving the user experience.

## Claims

1. A method for transmitting multimedia video data, comprising:
a source end configuring different data channels for a key frame data and a non-key frame data, and configuring a higher bandwidth for a key frame data channel than that for a non-key frame data channel; and
when said source end sends data to a receiving end, said source end bearing said key frame data and said non-key frame data on different data channels to transmit based on configuration.

2. The method of claim 1, wherein,
there is one or more channels configured for said key frame data; and there is one or more channels configured for said non-key frame data.

3. The method of claim 1, wherein, said method further comprises:
configuring a higher priority for said key frame data channel than that for said non-key frame data channel;
when transmitting data, sending said key frame data and said non-key frame data in a descending order of priority.

4. The method of claim 1, 2 or 3, wherein, said method further comprises:
configuring different data channels and different bandwidths for different types of non-key frames;
when transmitting said non-key frame data, bearing said different types of non-key frame data on different data channels to transmit based on configuration.

5. The method of claim 4, wherein, said method further comprises:
configuring different priorities for different types of non-key frames;
when sending said non-key frame data, sending in a descending order of the priorities.

6. A method for receiving multimedia video data, comprising:
a receiving end sending a resource request to a source end, and establishing multiple data channels with said source end according to a configuration content fed back by said source end;
said receiving end receiving key frame data and non-key frame data on different data channels;
said receiving end merging and outputting received said key frame data and said non-key frame data.

7. The method of claim 6, wherein,
said configuration content fed back by said source end comprises data channels bearing said key frame data and said non-key frame data.

8. A transmitting device for multimedia video data, comprising a configuring module and a transmitting module, wherein:
said configuring module is set to configure different data paths for key frame data and non-key frame data and configure a higher bandwidth for a key frame data channel than that for a non-key frame data channel;
said transmitting module is set to, when sending data to a receiving end, bearing said key frame data and said non-key frame data on different data channels to transmit according to configuration.

9. The transmitting device of claim 8, wherein,
there are one or more channels configured by said configuring module for said key frame data, and there are one or more channels configured by said configuring module for said non-key frame data.

10. The transmitting device of claim 8, wherein,
said configuring module is also set to configure a higher priority for said key frame data channel than that for said non-key frame data channel;
said transmitting module is set to transmit data in the following manner: transmitting said key frame data and said non-key frame data in a descending order of priority.

11. The transmitting device of claim 8, 9 or 10, wherein,
said configuring module is further set to configure different data channels and different bandwidths for different types of non-key frames;
said transmitting module is configured to transmit said non-key frame data in the following manner: bearing said different types of non-key frame data on different data channels to transmit according to configuration.

12. The transmitting device of claim 11, wherein,
said configuring module is further set to configure different priorities for different types of non-key frames;
said transmitting module is configured to transmit said non-key frame data in the following manner: transmitting in a descending order of the priorities.

13. A receiving device for multimedia video data, comprising a requesting module, a receiving module, and a processing module, wherein:
said requesting module is set to send a resource request to a source end, and establish multiple data channels with said source end according to a configuration content fed back by said source end;
said receiving module is set to receive key frame data and non-key frame data on different data channels;
said processing module is set to merge and output received said key frame data and said non-key frame data.

14. The receiving device of claim 13, wherein,
said configuration content comprises data channels bearing said key frame data and said non-key frame data.
